(19) Europäisches Patentamt
European Patent Office
Office européen des brevets

(11) **EP 1 887 409 A2**

(12) **EUROPEAN PATENT APPLICATION**

(43) Date of publication:
**13.02.2008 Bulletin 2008/07**

(51) Int Cl.:
***G02B 26/08*** *(2006.01)*

(21) Application number: **07015367.1**

(22) Date of filing: **06.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **09.08.2006 JP 2006216621**

(71) Applicant: **Funai Electric Co., Ltd.**
**Daito-shi,**
**Osaka 574-0013 (JP)**

(72) Inventors:
 • **Tanaka, Fuminori**
  **Daito-shi,**
  **Osaka 574-0013 (JP)**

 • **Tanaka, Katsuhiko**
  **Kusatsu,**
  **Shiga, 525-8577 (JP)**
 • **Ishii, Akira**
  **Kusatsu,**
  **Shiga, 525-8577 (JP)**
 • **Sugiyama, Susumu**
  **Kusatsu,**
  **Shiga, 525-8577 (JP)**

(74) Representative: **Beetz & Partner**
**Steinsdorfstrasse 10**
**80538 München (DE)**

(54) **Variable shape mirror**

(57)    A variable shape mirror includes a support substrate, a mirror substrate that is opposed to the support substrate, a fixing member that is disposed on the support substrate and fixes the mirror substrate, and a piezoelectric element that is disposed on the support substrate and is expanded or contracted so that a reflection plane of the mirror substrate can be deformed. A coefficient of linear expansion of the fixing member is larger than a coefficient of linear expansion of the piezoelectric element. A back surface of the mirror substrate is provided with a metal bonding layer that is disposed in at least a portion to be bonded to the fixing member. The metal bonding layer enables the mirror substrate and the fixing member to be bonded to each other by pressing the mirror substrate and the fixing member to each other while they are heated. The mirror substrate and the piezoelectric element are not bonded to each other.

F I G. 1

EP 1 887 409 A2

**Description**

**BACKGROUND OF THE INVENTION**

**Field of the Invention**

The present invention relates to a variable shape mirror that is provided to an optical device such as an optical pickup device and is capable of changing a shape of its reflection plane.

**Description of Related Art**

Conventionally, there are various proposals about a variable shape mirror that is capable of changing a shape of its reflection plane so as to correct optical distortion or the like of an incident light beam, and such a variable shape mirror is used in wide range of applications including an image processing apparatus and an optical pickup device.

For example, in the field of the optical pickup device, the variable shape mirror is used for correcting wave aberration that may occur when information is read or written on an optical disc such as a CD (compact disc) or a DVD (digital versatile disc), which includes coma aberration that may happen when a disc surface of the optical disc is tilted with respect to the optical axis and spherical aberration resulted from a variation of a transparent resin film (a protective layer) that protects the recording surface of the optical disc, as shown in JP-A-2003-215476 or JP-A-2005-196559.

As this variable shape mirror, there is a variable shape mirror having a unimorph or a bimorph shape using a piezoelectric element as shown in JP-A-2003-215476, as well as a variable shape mirror that is made of laminated thin films such as piezoelectric films as shown in JP-A-2005-196859. In addition, as another type of the variable shape mirror, there is a variable shape mirror that can deform its reflection plane utilizing expansion and contraction of a column-shaped piezoelectric element (piezoelectric actuator) in the longitudinal direction (the direction perpendicular to the reflection plane of the variable shape mirror), as shown in JP-A-H05-333274. Furthermore, the variable shape mirror that can deform its reflection plane utilizing expansion and contraction of the piezoelectric element in the longitudinal direction has an advantage in that it can be manufactured easily compared with the variable shape mirror disclosed in JP-A-2003-215476 or JP-A-2005-196859. In addition, it has another advantage in cost in particular compared with the variable shape mirror disclosed in JP-A-2005-196859, which is made of laminated thin films.

**SUMMARY OF THE INVENTION**

However, the variable shape mirror that can deform its reflection plane utilizing expansion and contraction of the piezoelectric element in the longitudinal direction as shown in JP-A-H05-333274 has a problem as follows. Adhesive is usually used for bonding a mirror substrate having the reflection plane with the piezoelectric element and for bonding the mirror substrate with a fixing member that has a function of fixing the mirror substrate. In this case, a thickness of an adhesive layer increases so that distortion may appear in the reflection plane that is provided to the mirror substrate on the opposite surface as an influence of residual stress such as tensile stress or compressive stress that may occur in the adhesive layer. If such distortion appears, the variable shape mirror cannot correct sufficiently the optical distortion of the incident light beam. In addition, since the adhesive layer is thick, the expansion and contraction of the piezoelectric element cannot be transformed into deformation of the reflection plane efficiently.

Considering this point, it is conceivable to use a metal bonding layer for bonding the mirror substrate with the piezoelectric element and for bonding the mirror substrate with the fixing member when the variable shape mirror is manufactured, and to apply a pressure to the members to be bonded to each other while heating them (hereinafter referred to as a thermocompression bonding method). According to this thermocompression bonding method, a thickness of the bonding layer can be approximately 1 μm, for example. Therefore, distortion due to residual stress such as tensile stress or compressive stress that may occur in the bonding layer can be reduced. In addition, it is able to relieve the problem that the expansion and contraction of the piezoelectric element cannot be transformed into deformation of the reflection plane efficiently due to excessive thickness of the bonding layer, and it is able to deform the reflection plane with low electric power.

However, the bonding process is performed at high temperature when the mirror substrate and piezoelectric element, as well as the mirror substrate and the fixing member are bonded to each other by the thermocompression bonding method in the manufacturing of the variable shape mirror. Therefore, there is a case where the mirror substrate and the piezoelectric element, or the mirror substrate and the fixing member cannot be bonded to each other due to a difference between a coefficient of linear expansion of the piezoelectric element and that of the fixing member, or the case where distortion appears in the mirror substrate even if they are bonded to each other.

An object of the present invention is to provide a variable shape mirror having a piezoelectric element for deforming a reflection plane with expansion and contraction generated when a voltage is applied, which can be manufactured while reducing distortion that may occur in the reflection plane when it is assembled, as much as possible.

A variable shape mirror of the present invention includes a support substrate, a mirror substrate that is opposed to the support substrate and has a reflection plane on the surface opposite to the surface facing the support substrate, a fixing member that is disposed on the support substrate and fixes the mirror substrate, at least one piezoelectric element that is disposed on the support substrate and is expanded or contracted when a voltage is applied so that an area of the mirror substrate enclosed by a portion fixed by the fixing member can be deformed. Thus, the variable shape mirror can deform the mirror substrate as well as the reflection plane by applying a voltage to the piezoelectric element. A coefficient of linear expansion of the fixing member is larger than a coefficient of linear expansion of the piezoelectric element. A back surface of the mirror substrate is provided with a metal bonding layer that is disposed in at least a portion to be bonded to the fixing member, the metal bonding layer enabling the mirror substrate and the fixing member to be bonded to each other by pressing the mirror substrate and the fixing member to each other while they are heated. The mirror substrate and the piezoelectric element are not bonded to each other.

According to this structure, since the piezoelectric element is not bonded to the mirror substrate, it is able to avoid distortion of the reflection plane that may occur due to boding between the piezoelectric element and the mirror substrate. In addition, since the fixing member and the mirror substrate are bonded to each other via the metal bonding layer, the bonding layer can be thinner so that distortion that occurs in the reflection plane can be reduced. Furthermore, the fixing member has a larger coefficient of linear expansion than the piezoelectric element does. Therefore, when the mirror substrate and the fixing member are bonded by thermocompression bonding method in a manufacturing process of the variable shape mirror, it is able to realize a state where the piezoelectric element does not contact with the mirror substrate. Thus, it is able to avoid a situation where the piezoelectric element is bonded to the mirror substrate by mistake despite that it is not required to be bonded. Further, it is able to avoid the state where a gap occurs between the mirror substrate and the fixing member due to thermal expansion of the piezoelectric element, so that the mirror substrate cannot be bonded to the fixing member or distortion remains when the mirror substrate is bonded to the fixing member. As described above, it is able to reduce distortion as much as possible, which may occur in the reflection plane of the mirror substrate in the manufacturing process.

In addition, it is preferable that the variable shape mirror of the present invention having the above-mentioned structure also has the following feature. When a length of the fixing member in a height direction that is parallel to the direction perpendicular to a plate face of the support substrate and a coefficient of linear expansion of the same are denoted by $L1$ (mm) and $\alpha1$ (per degree centigrade), respectively, and a length of the piezoelectric element in the height direction and a coefficient of linear expansion of the same are denoted by $L2$ (mm) and $\alpha2$ (per degree centigrade), respectively, and a variation width that is obtained as a difference between a maximum permissible length and a minimum permissible length of the fixing member and the piezoelectric element in the height direction is denoted by $W$ (mm), then the coefficient of linear expansion $\alpha1$ of the fixing member satisfies the expression below,

$$\alpha1 > (\alpha2 \times L2 + (W/\Delta T))/L1,$$

where, $\Delta T$ denotes a temperature variation (degrees centigrade) between before and after thermal expansion.

According to this structure, materials of the fixing member and the piezoelectric element are determined considering a size variation that is inevitable to occur due to influence of accuracy of finishing in the manufacturing process. Therefore, the above-mentioned ill effect of thermal expansion of the piezoelectric element in the thermocompression bonding process can be further reduced. For this reason, distortion that may occur in the reflection plane of the mirror substrate in the manufacturing process can be further reduced.

In addition, it is preferable that the variable shape mirror of the present invention having the above-mentioned structure also has the following feature, that is, the metal bonding layer is disposed between the fixing member and the support substrate, and between the piezoelectric element and the support substrate.

According to this structure, the bonding parts of the fixing member and the piezoelectric element are bonded by the thermocompression bonding method entirely, so the variable shape mirror can be manufactured easily. In addition, since the bonding layer can be thinner as a whole, the variable shape mirror hardly has a distorted shape.

## BRIEF DESCRIPTION OF THE DRAWINGS

Fig. 1 is a diagram showing a structure of a variable shape mirror according to an embodiment of the present invention, which is an exploded perspective view in which structural elements of the variable shape mirror are shown in an exploded manner.

Fig. 2 is a general cross sectional view of the variable shape mirror shown in Fig. 1 in the assembled state, cut along the line A-A in Fig. 1.

Fig. 3 is a diagram showing a state where a piezoelectric element is expanded in the variable shape mirror shown in Fig. 2.

Fig. 4 is a cross sectional view showing the variable shape mirror of the present embodiment in the state before the mirror substrate is bonded, which is a diagram for explaining the case where a coefficient of linear expansion of the piezoelectric element is larger than a coefficient of linear expansion of a fixing member.

Fig. 5 is a cross sectional view showing the variable shape mirror of the present embodiment in the state before the mirror substrate is bonded, which is a diagram for explaining the case where the coefficient of linear expansion of the fixing member is larger than the coefficient of linear expansion of the piezoelectric element.

Fig. 6A is a schematic diagram classifying variations of the fixing member and the piezoelectric element in the height direction.

Fig. 6B is a schematic diagram classifying variations of the fixing member and the piezoelectric element in the height direction

Fig. 6C is a schematic diagram classifying variations of the fixing member and the piezoelectric element in the height direction.

Fig. 7 shows a table of an example of lower limit values of a difference between a coefficient of linear expansion of the fixing member and a coefficient of linear expansion of the piezoelectric element, which are calculated by using the expression (5).

Fig. 8 shows a table of a coefficient of linear expansion of the individual members at each temperature.

Fig. 9 shows another embodiment of the variable shape mirror according to the present invention.

## DETAILED DESCRIPTION OF THE PREFERRED EMBODIMENTS

Hereinafter, an embodiment of the present invention will be described with reference to the attached drawings. Note that the embodiment described here is merely an example, and that the present invention is not limited to this embodiment. In addition, sizes and thicknesses and the like of individual elements in the drawings are shown for a purpose of easy understanding and do not always match the real structure.

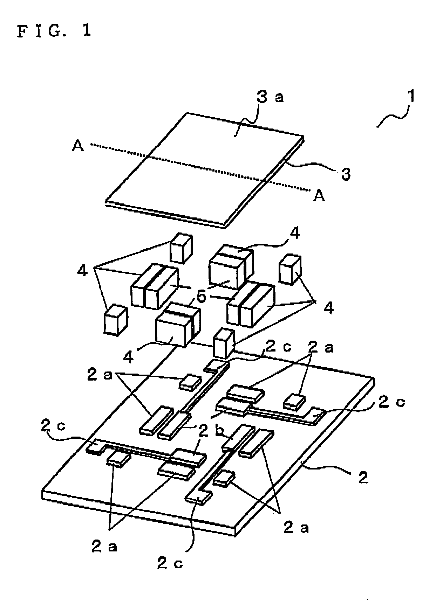

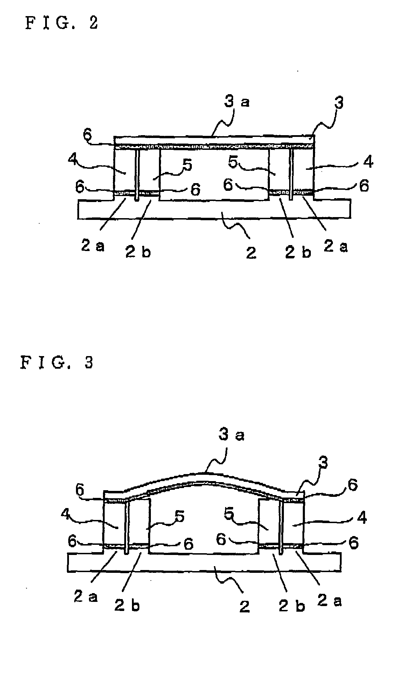

Fig. 1 is a diagram showing an embodiment of a variable shape mirror according to the present invention and is an exploded perspective view in which structural elements of the variable shape mirror are shown in an exploded manner. In addition, Fig. 2 is a general cross sectional view of the variable shape mirror shown in Fig. 1 in the assembled state, cut along the line A-A in Fig.1. With reference to Figs. 1 and 2, a structure of the variable shape mirror according to the present embodiment will be described.

Numeral 1 denotes the variable shape mirror that is capable of deforming its reflection plane so that optical distortion of an incident light beam can be corrected. This variable shape mirror 1 includes a support substrate 2, a mirror substrate 3 that is opposed to the support substrate 2, fixing members 4 that are disposed on the support substrate 2 and fix the mirror substrate 3, and piezoelectric elements 5 that are disposed on the support substrate 2 and press the mirror substrate 3 by their expansion and contraction so that a reflection plane 3a can be deformed. Hereinafter, the individual portions will be described in detail.

The support substrate 2 plays a role of supporting the fixing member 4 and the piezoelectric element 5. The support substrate 2 is made up of an insulating member and is formed with glass or ceramics or the like, for example. On the support substrate 2, there are support tables 2a and 2b on which the fixing member 4 and the piezoelectric element 5 are disposed, respectively. Furthermore, a protruding pattern 2c is drawn out from each of the support tables 2b on which the piezoelectric element 5 are disposed. Note that the support tables 2a and 2b and the protruding pattern 2c are formed by an etching process or a sandblasting process or the like, for example.

The support table 2b on which the piezoelectric element 5 is disposed is covered with an Au layer, which has a function as an electrode of the piezoelectric element 5 and a function of bonding the piezoelectric element 5 with the support substrate 2. In addition, the protruding pattern 2c extending from the support table 2b on which the piezoelectric element 5 is disposed is also covered with an Au layer, so that the protruding pattern 2c works as a wiring pattern that enables power supply from the outside to the piezoelectric element 5. The Au layer covering the support table 2b and the protruding pattern 2c is formed by a vapor deposition method or a sputtering method, for example.

Although the present embodiment adopts the structure of providing the support table 2a for supporting the fixing member 4 for the purpose of facilitating positioning or the like, the present invention is not limited to this structure. It is possible, for example, to adopt a structure in which the support table 2a for supporting the fixing member 4 is not provided. Furthermore, although the support table 2b and the protruding pattern 2c are covered with the Au layer in the present embodiment, the present invention is not limited to this structure. It is possible to adopt a structure in which they are covered with other metal layers or a structure in which the support table 2a and the protruding pattern 2c are made of silicon (Si) that is a conductive material, and the protruding pattern 2c is not covered with the Au layer.

The mirror substrate 3 is disposed in substantially parallel with the support substrate 2 and is opposed to the same, and the reflection plane 3a is formed on the surface that is opposite to the surface facing the support substrate 2. Since this mirror substrate 3 has a structure of being deformed by expansion and contraction of the piezoelectric elements 5 so that the reflection plane 3a is also deformed, it is required to be formed having a small thickness. In addition, in order to avoid a breakage of the mirror substrate 3 when it is deformed by the expansion and contraction of the piezoelectric element 5, it is required to be made of a material having stiffness.

Considering this point, the mirror substrate 3 is made up of a silicon (Si) substrate having a thickness of approximately 100 $\mu$m in the present embodiment.

Although the mirror substrate 3 is made of silicon in the present embodiment, the present invention is not limited to this structure. It may be made of other material as long as it can be thinner and has stiffness. In addition, the thickness of the mirror substrate 3 can be changed variously in accordance with its purpose.

The reflection plane 3a of the mirror substrate 3 is obtained by forming an aluminum (Al) layer on the mirror substrate 3. The Al layer is formed by a vapor deposition method or a sputtering method or the like. Note that the reflection plane 3a can be made not only of aluminum but also of other material as long as it can realize a desired reflection coefficient for reflection light of a light beam entering the reflection plane 3a of the variable shape mirror 1. For example, gold (Au) or silver (Ag) or the like can be used as various modifications. In addition, although the entire of the upper surface of the mirror substrate 3 is made the reflection plane 3a in the present embodiment, the present invention is not limited to this structure. It is possible to adopt another structure in which an area of the reflection plane 3a is determined in accordance with an incident diameter of the incident light beam, so that a reflection layer is formed only in the area.

The fixing member 4 is disposed on the support substrate 2 and plays a role of fixing the mirror substrate 3. In the present embodiment, the fixing member 4 supports the mirror substrate 3 at eight points including its four corners and middle portions of four sides on the outer rim of the rectangular mirror substrate 3 (positions sandwiched by two of the four fixing members 4 disposed at corners). Note that the arrangement of the fixing members 4 is not limited to the structure of the present embodiment, but various modifications are possible as long as the outer rime of the mirror substrate 3 can be fixed securely by the structure.

This fixing member 4 is made of glass or ceramics or the like, for example. The material is selected in relationship with a material or the like of the piezoelectric element 5. This point will be described later. Each of the bonding of the fixing member 4 with the support substrate 2 and the bonding of the fixing member 4 with the mirror substrate 3 is performed by the thermocompression bonding method in which the Au layer that is a bonding layer 6 is disposed between them, and a pressure is applied for bonding at high temperature within the range of 400 to 550 degrees centigrade.

Although the Au layer is disposed as the bonding layer 6 in the present embodiment, the present invention is not limited to this structure. Other metal layer can be used as long as it can bond the support substrate 2 and the fixing member 4 to each other, and the mirror substrate 3 and the fixing member 4 to each other, by applying pressure under heated condition. For example, it is possible to use an alloy of gold and tin (Au-Sn alloy) or the like.

The piezoelectric element 5 can be expanded or contracted in the direction perpendicular to the reflection plane 3a when a voltage is applied to it. Thus, the mirror substrate 3 as well as the reflection plane 3a can be deformed. A type of the material of the piezoelectric element 5 is not limited in particular as long as it is piezoelectric ceramics such as barium titanate ($BaTiO_3$) or lead titanate zirconate ($Pb(Zr_xTi_{1-x})O_3$). In the present embodiment, lead titanate zirconate is used because it has good piezoelectric characteristics.

Furthermore, the piezoelectric element 5 may be a so-called lamination type piezoelectric actuator that has a know structure in which layer piezoelectric members and layer electrodes are laminated alternately, or it may be a non-lamination type actuator having a structure in which the piezoelectric members are sandwiched between two electrodes only. The lamination type piezoelectric actuator has an advantage in that a larger force can be generated.

The piezoelectric elements 5 are disposed on the support substrate 2 and on the inside of the fixing members 4 that are disposed on the outer rim side of the mirror substrate 3. Moreover, four of them are arranged on the support substrate 2 in the cross direction, and the piezoelectric elements 5 facing each other are disposed in a symmetric manner with respect to an axis that passes through the center of the reflection plane 3a and is perpendicular to the reflection plane 3a. The piezoelectric elements 5 are disposed in this way in order to deform the reflection plane 3a easily with a good balance without increasing the number of the piezoelectric elements 5 excessively. However, the arrangement and the number of the piezoelectric elements 5 are not limited to this structure but can be modified variously in accordance with its purpose.

The piezoelectric element 5 and the support substrate 2 are bonded to each other by thermocompression bonding via the Au layer that is the bonding layer 6 at high temperature (e.g., 400 to 550 degrees centigrade). In the same manner as bonding of the fixing member 4, a metal layer other than the Au layer can be used as long as it can bond the support substrate 2 and the piezoelectric element 4 to each other by applying pressure in the heated state. For example, an alloy of gold and tin (Au-Sn alloy) or the like can be used.

On the other hand, the piezoelectric element 5 is formed so as to contact normally with the mirror substrate 3 but not to be bonded with the mirror substrate 3. This is because if the mirror substrate 3 and the piezoelectric element 5 are bonded to each other, distortion occurs at the position corresponding to the bonded part on the reflection plane 3a side due to the bonding between the piezoelectric element 5 and the mirror substrate 3, and the distortion should be prevented. Furthermore, since the piezoelectric element 5 is disposed at a position corresponding to inside the incident area of the light beam entering the variable shape mirror 1 or in the outside vicinity of the area, it is effective to prevent distortion from occurring in the reflection plane 3a by avoiding the bonding between the piezoelectric element 5 and the mirror substrate 3.

The piezoelectric element 5 is expanded or contracted when a voltage is applied to it. One of the electrodes for applying a voltage to the piezoelectric element 5 is realized by the Au layer that covers the support table 2b disposed on the support substrate 2 as described above, and the other electrode is realized by the mirror substrate 3 made of silicon. In other words, the mirror substrate 3 plays a role as a common electrode for all the four piezoelectric elements 5. Therefore, the mirror substrate 3 is adapted to contact with the piezoelectric element 5 normally.

Furthermore, in the present embodiment in detail, the bonding layer 6 made of the Au layer that is disposed on the entire surface of the mirror substrate 3 that is opposite to the reflection plane 3a and the piezoelectric elements 5 contact with each other. This bonding layer 6 is provided for bonding the mirror substrate 3 and the fixing members 4 to each other. The reason why the bonding layer 6 is disposed on the entire surface of the mirror substrate 3 that is opposite to the reflection plane 3 is that it has an advantage in that manufacturing process can be simplified or the like compared with the case where the bonding layer 6 made of the Au layer is formed only at the positions where the mirror substrate 3 and the fixing members 4 are bonded to each other. When the bonding layer 6 is disposed on the entire surface of the mirror substrate 3 that is opposite to the reflection plane 3a as described above, there is a possibility that the piezoelectric elements 5 are bonded to the mirror substrate 3 by mistake in the manufacturing process. Concerning this point, as described later, the variable shape mirror of the present invention is devised so that the piezoelectric elements 5 are not bonded to the mirror substrate 3 by mistake.

In addition, the structure of the electrodes and the wiring for the piezoelectric element 5 is not limited to the structure of the present embodiment. For example, it is possible to adopt a structure in which the piezoelectric element 5 is disposed on the support substrate 2 without providing the support table 2b, and a through hole is provided to the support substrate 2 so that a wiring passes through the through hole to form one electrode for the piezoelectric element 5 and other electrode for the piezoelectric element 5 is formed on the surface of the mirror substrate 3 facing the support substrate 2. In addition, if the piezoelectric element 5 is a lamination type piezoelectric actuator, it is possible to adopt a structure in which both the plus and the minus electrodes are drawn out on the support substrate 2.

An operation of the variable shape mirror 1 having the above-mentioned structure will be described. Fig. 3 is a diagram showing a state where a piezoelectric element 5 is expanded in the variable shape mirror I shown in Fig. 2. As shown in Fig. 3, if the piezoelectric element 5 is expanded, the mirror substrate 3 is pressed upward so that the reflection plane 3a is deformed. On the other hand, since the piezoelectric element 5 and the mirror substrate 3 are not bonded to each other, the mirror substrate 3 is not deformed when the piezoelectric element 5 is contracted. Although Fig. 3 shows a state where both the left and the right piezoelectric elements 5 are expanded in the same manner when the same voltage is applied to them, different voltages can be applied to the piezoelectric elements 5. In other words, voltages that are applied to the piezoelectric elements 5 can be controlled separately so that a desired deformation of the reflection plane 3a can be obtained.

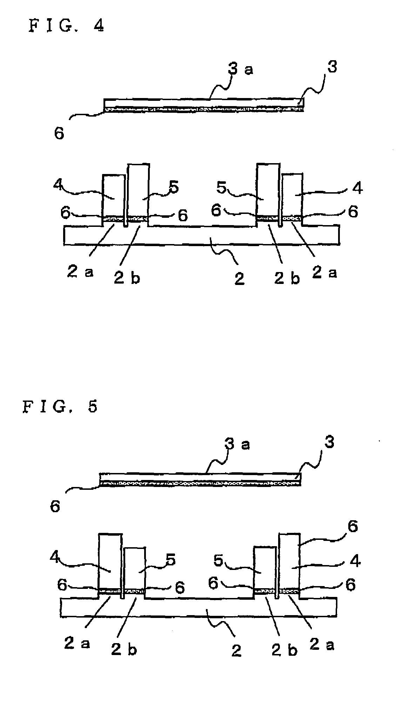

As to the variable shape mirror 1 as described above, the material of the fixing member 4 is selected in accordance with a relationship with the material of the piezoelectric element 5. More specifically, it is selected so that a coefficient of linear expansion of the fixing member 4 is larger than a coefficient of linear expansion of the piezoelectric element 5. First, this reason will be described with reference to Figs. 4 and 5. Fig. 4 is a cross sectional view showing the variable shape mirror 1 in the state before the mirror substrate 3 is bonded, and it is a diagram for explaining the case where a coefficient of linear expansion of the piezoelectric element 5 is larger than a coefficient of linear expansion of the fixing member 4. Fig. 5 is a cross sectional view showing the variable shape mirror 1 in the state before the mirror substrate 3 is bonded similarly to Fig. 4, and it is a diagram for explaining the case where a coefficient of linear expansion of the fixing member 4 is larger than a coefficient of linear expansion of the piezoelectric element 5.

When the variable shape mirror 1 is formed, the fixing member 4 should play a role of fixing the mirror substrate 3 as described above, so it is made of a material different from that of the piezoelectric element 5. Therefore, the piezoelectric element 5 and the fixing member 4 have different coefficients of linear expansion. If a coefficient of linear expansion of the piezoelectric element 5 is larger than a coefficient of linear expansion of the fixing member 4, as shown in Fig. 4, when it is heated, the piezoelectric element 5 becomes longer than the fixing member 4 in the direction perpendicular to the reflection plane 3a (in the vertical direction in Fig. 4). Then, the fixing member 4 cannot be bonded to the mirror substrate 3 by thermocompression bonding. Even if it can be bonded by thermocompression bonding, it will cause a problem that the reflection plane 3a of the minor substrate 3 is distorted, or that the piezoelectric element 5 is bonded to the mirror substrate 3.

If a coefficient of linear expansion of the fixing member 4 is the same as that of the piezoelectric element 5, the piezoelectric element 5 does not become longer than the fixing member 4 in the height direction (in the vertical direction), but it may cause a problem that the piezoelectric element 5 contacts with the mirror substrate 3 so that they are bonded to each other.

Therefore, the material of the fixing member 4 of the variable shape mirror 1 is selected so that a coefficient of linear expansion of the fixing member 4 is larger than a coefficient of linear expansion of the piezoelectric element 5. In this case, as shown in Fig. 5, when it is heated, the fixing member 4 becomes longer than the piezoelectric element 5 in the vertical direction. Therefore, the fixing member 4 can be bonded to the mirror substrate 3 by thermocompression bonding without hindered by thermal expansion of the piezoelectric element 5. Further, since the piezoelectric element 5 does not contact with the mirror substrate 3 in the thermocompression bonding process, bonding between the piezoelectric element 5 and the mirror substrate 3 can be prevented.

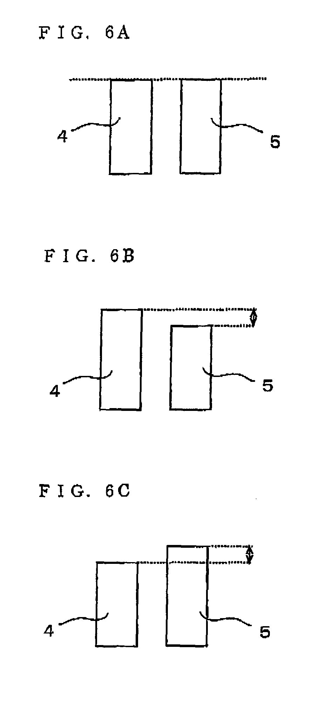

As to the variable shape mirror 1 of the present embodiment, the fixing member 4 and the piezoelectric element 5 are polished to have the same heights (i.e., lengths in the vertical direction in Fig. 4, and the same meaning hereinafter) so that the mirror substrate 3 becomes substantially parallel with the support substrate 2. However, the heights may have variations due to accuracy of finishing. Therefore, the material of the fixing member 4 is selected considering this point, too. This will be described with reference to Figs. 6A, 6B and 6C. Figs. 6A-6C are schematic diagrams classifying variations of the fixing member 4 and the piezoelectric element 5 in the height direction.

If a height of the fixing member 4 is the same as a height of the piezoelectric element 5 as shown in Fig. 6A, , or if the fixing member 4 is higher than the other as shown in Fig. 6B, the fixing member 4 is always higher than the piezoelectric element 5 in the thermocompression bonding process under the condition that a coefficient of linear expansion of the fixing member 4 is larger than a coefficient of linear expansion of the piezoelectric element 5. Therefore, the state shown in Fig. 5 appears as described above, and there is no problem.

However, if the piezoelectric element 5 is higher than the fixing member 4 as shown in Fig. 6C, there is the case where the fixing member 4 becomes lower than the piezoelectric element 5 depending on an expansion amount due to thermal expansion of the fixing member 4 at a temperature that is required for the thermocompression bonding process (depending on a type of the metal layer that is used for the thermocompression bonding process). In this case (corresponding to the state shown in Fig. 4), it will cause the problem of bonding between the piezoelectric element 5 and the mirror substrate 3, or the like.

Considering this point, how to select the fixing member 4 will be described as below. In this description, a height of the fixing member 4, an expansion amount thereof in the height direction at a temperature required for the thermocompression bonding process and a coefficient of linear expansion thereof are denoted by L1 (mm), $\Delta$L1 (mm) and $\alpha$1 (per degree centigrade), respectively. A height of the piezoelectric element 5, an expansion amount thereof in the height direction at a temperature required for the thermocompression bonding process and a coefficient of linear expansion thereof are denoted by L2 (mm), $\Delta$L2 (mm) and $\alpha$2 (per degree centigrade), respectively.

In addition, a variation width of the fixing member 4 and the piezoelectric element 5, which is determined by subtracting the minimum permissible height from the maximum permissible height, is denoted by W (mm). There is a variation of the heights of the fixing member 4 and the piezoelectric element 5 due to accuracy of finishing as described above. If the variation width in the manufacturing process is too large, it may cause a problem that distortion occurs in the reflection plane 3a or that the piezoelectric element 5 does not contact with the mirror substrate 3, or the like when the variable shape mirror 1 is formed. Therefore, a permissible value of the variation width is determined considering a variation in sizes in the manufacturing process and distortion in the reflection plane 3a in the manufacturing process as described above.

In this case, in order that the fixing member 4 is always higher than the piezoelectric element 5 in the thermocompression bonding process, the following expression (1) should be satisfied.

$$(\Delta L1 - \Delta L2) > W \ .... \ (1)$$

As to the expansion amount in a thermally expanded state, the following expressions hold, which use the coefficients of linear expansion.

$$\Delta L1 = \alpha 1 \times \Delta T \times L1 \ .... \ (2)$$

$$\Delta L2 = \alpha 2 \times \Delta T \times L2 \ .... \ (3)$$

$\Delta T$ denotes a temperature variation (degrees centigrade) between before and after the thermal expansion, which corresponds to a value obtained by subtracting room temperature from the temperature in the thermocompression bonding process in the present embodiment.

Substituting the expressions (2) and (3) into the expression (1) and

$$\alpha 1 > (\alpha 2 \times L2 + (W/\Delta T))/L1 \quad .... (4)$$

organizing the expression, the following expression is derived. Further, since L1= L2 in the present embodiment, following expression is derived.

$$\alpha 1 - \alpha 2 > W/(\Delta T \times L1) \quad .... (5)$$

Thus, if the fixing member 4 is selected so that a difference between a coefficient of linear expansion of the fixing member 4 ($\alpha 1$) and a coefficient of linear expansion of the piezoelectric element 5 ($\alpha 2$) of the variable shape mirror 1 satisfies the expression (5), it is able to obtain the variable shape mirror 1 that will never be in the sate shown in Fig. 4 and is capable of reducing distortion that may occur in the reflection plane 3a in the manufacturing process.

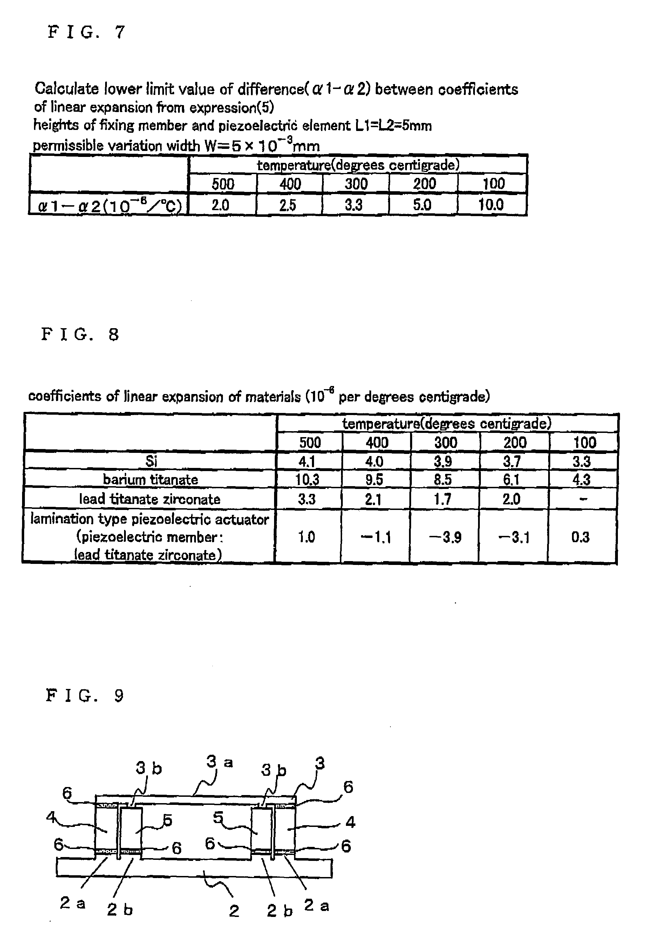

Fig. 7 shows a table of an example of lower limit values of a difference between a coefficient of linear expansion of the fixing member 4 and a coefficient of linear expansion of the piezoelectric element 5, which are calculated by using the expression (5). Here, the term "lower limit value" means that the difference between the coefficients of linear expansion is required to be larger than this value. In Fig. 7, the heights of the fixing member 4 and the piezoelectric element 5 are both 5 mm, and a permissible variation width W of the heights of the fixing member 4 and the piezoelectric element 5 is $5 \times 10^{-3}$ mm in this case. In addition, $\Delta T$ is the same as a temperature in the thermocompression bonding process (the above-mentioned room temperature is regarded as 0 degree centigrade).

In addition, Fig. 8 shows a table of a coefficient of linear expansion of the individual members at each temperature. Note that the coefficient of linear expansion in this table is an average coefficient of linear expansion, which is a value obtained by measuring displacement of length of a sample in the case where each temperature is changed at a predetermined rate (e.g., 2 degrees centigrade/min).

It is understood from Figs. 7 and 8 that if the piezoelectric element 5 is a lamination type piezoelectric actuator having the piezoelectric member made of lead titanate zirconate ($Pb(Zr_xTi_{1-x})O_3$), it is possible to select silicon (Si), barium titanate ($BaTiO_3$) or lead titanate zirconate as a material of the fixing member 4, for example, in the structure where the Au layer is used for the thermocompression bonding process (the heated temperature is approximately between 400 and 500 degrees centigrade) as described above.

On the other hand, if the piezoelectric element 5 is a non-lamination type piezoelectric actuator made of lead titanate zirconate, it is improper to select silicon as a material of the fixing member 4 though it is possible to select barium titanate as the same, for example, in the structure where the Au layer is used for the thermocompression bonding process as described above.

Note that the fixing member 4 described here is merely an example, and the present invention is not limited to this structure. It can be modified variously as long as it is selected so as to satisfy the expression (5).

Although the embodiment described above shows the case where a height of the fixing member 4 is the same as a height of the piezoelectric element 5 in the variable shape mirror 1, there is a case where the fixing member 4 and the piezoelectric element 5 have different heights. Of course, the present invention can be applied to this case, too. In particular, as shown in Fig. 9, in order to make the expansion and contraction of the piezoelectric element 5 cause deformation of the mirror substrate 3 efficiently, a part of the mirror substrate 3 that contact with the piezoelectric element 5 may be provided with a protruding portion 3b. In this case, the height of the piezoelectric element 5 becomes lower than the height of the fixing member 4 (L1 > L2). Furthermore, the present invention can be applied to this case, too.

In addition, although the embodiment described above adopts the structure where the bonding layer 6 is provided to the entire surface of the mirror substrate 3 that is opposite to the reflection plane 3a, the present invention is not limited to this structure. For example, it is possible to adopt a structure in which the bonding layer 6 is provided only in the area for bonding to the fixing member 4. Even in this case, according to the present invention, distortion can be prevented from occurring when the fixing member 4 and the mirror substrate 3 are bonded to each other due to the thermal expansion of the piezoelectric element 5, and the present invention is useful.

Furthermore, although a general shape of the variable shape mirror 1 is a rectangular shape as shown in Fig. 1 in the embodiment described above, the present invention is not limited to this shape in particular. It can be modified in the scope of the present invention without deviating from the object of the present invention. For example, it is possible that the support substrate 2 and the mirror substrate 3 have a circular shape. In addition, the shapes of the fixing member 4 and the piezoelectric element 5 are also not limited to the shapes of present embodiment, and they may have a cylindrical shape or the like, for example.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

Since the variable shape mirror of the present invention has a structure that can reduce distortion that may occur in the reflection plane in the assembling process, optical distortion in the incident light beam can be corrected appropriately if the variable shape mirror of the present invention is used. Therefore, the variable shape mirror of the present invention can be applied to various optical device equipped with an optical system that needs correction of optical distortion in a light beam. For example, it can be applied to an optical pickup device, a video projector, a digital camera and the like.

## Claims

1. A variable shape mirror comprising;

   a support substrate;
   a mirror substrate that is opposed to the support substrate and has a reflection plane on the surface opposite to the surface facing the support substrate;
   a fixing member that is disposed on the support substrate and fixes the mirror substrate; and
   at least one piezoelectric element that is disposed on the support substrate and is expanded or contracted when a voltage is applied so that an area of the mirror substrate enclosed by portions fixed by the fixing member can be deformed,

   **characterized in that**

   a coefficient of linear expansion of the fixing member is larger than a coefficient of linear expansion of the piezoelectric element,
   a back surface of the mirror substrate is provided with a metal bonding layer that is disposed in at least a portion to be bonded to the fixing member, the metal bonding layer enabling the mirror substrate and the fixing member to be bonded to each other by pressing the mirror substrate and the fixing member to each other while they are heated, and
   the mirror substrate and the piezoelectric element are not bonded to each other.

2. The variable shape mirror according to claim 1, **characterized in that**

   when a length of the fixing member in a height direction that is parallel to the direction perpendicular to a plate face of the support substrate and a coefficient of linear expansion of the same are denoted by L1 (mm) and $\alpha 1$ (per degree centigrade), respectively, and
   a length of the piezoelectric element in the height direction and a coefficient of linear expansion of the same are denoted by L2 (mm) and $\alpha 2$ (per degree centigrade), respectively, and
   a variation width that is obtained as a difference between a maximum permissible length and a minimum permissible length of the fixing member and the piezoelectric element in the height direction is denoted by W (mm), then
   the coefficient of linear expansion $\alpha 1$ of the fixing member satisfies the expression below,

$$\alpha 1 > (\alpha 2 \times L2 + (W/\Delta T))/L1,$$

   where, $\Delta T$ denotes a temperature variation (degrees centigrade) between before and after thermal expansion.

3. The variable shape mirror according to claim 1 or 2, **characterized in that**
   the metal bonding layer is disposed between the fixing member and the support substrate, and between the piezoelectric element and the support substrate.

F I G. 1

FIG. 2

FIG. 3

FIG. 4

FIG. 5

FIG. 6A

4      5

FIG. 6B

4      5

FIG. 6C

4      5

F I G. 7

Calculate lower limit value of difference( $\alpha 1 - \alpha 2$ ) between coefficients
of linear expansion from expression(5)
heights of fixing member and piezoelectric element L1=L2=5mm
permissible variation width W=$5 \times 10^{-3}$mm

|  | temperature(degrees centigrade) | | | | |
| --- | --- | --- | --- | --- | --- |
|  | 500 | 400 | 300 | 200 | 100 |
| $\alpha 1 - \alpha 2 (10^{-6}/°C)$ | 2.0 | 2.5 | 3.3 | 5.0 | 10.0 |

F I G. 8

coefficients of linear expansion of materials ($10^{-6}$ per degrees centigrade)

|  | temperature(degrees centigrade) | | | | |
| --- | --- | --- | --- | --- | --- |
|  | 500 | 400 | 300 | 200 | 100 |
| Si | 4.1 | 4.0 | 3.9 | 3.7 | 3.3 |
| barium titanate | 10.3 | 9.5 | 8.5 | 6.1 | 4.3 |
| lead titanate zirconate | 3.3 | 2.1 | 1.7 | 2.0 | – |
| lamination type piezoelectric actuator (piezoelectric member: lead titanate zirconate) | 1.0 | −1.1 | −3.9 | −3.1 | 0.3 |

F I G. 9

**EP 1 887 409 A2**

**REFERENCES CITED IN THE DESCRIPTION**

**Patent documents cited in the description**

- JP 2003215476 A
- JP 2005196559 A
- JP 2003 A
- JP 215476 A
- JP 2005196859 A
- JP H05333274 A